# EUROPEAN PATENT SPECIFICATION

(11) **EP 3 244 661 B1**
(45) Date of publication and mention of the grant of the patent: **30.12.2020**
(21) Application number: 15879467.7
(22) Date of filing: 30.01.2015
(51) Int. Cl.: H04W 8/00, H04W 4/06

(54) **TERMINAL DISCOVERY METHOD AND DEVICE**
ENDGERÄTEENTDECKUNGSVERFAHREN UND -VORRICHTUNG
PROCÉDÉ ET DISPOSITIF DE DÉCOUVERTE DE TERMINAL

(43) Date of publication of application: 15.11.2017
(73) Proprietor: Huawei Technologies Co. Ltd., Shenzhen, Guangdong 518129 (CN)
(72) Inventor: HE, Yue, Shenzhen Guangdong 518129 (CN); JIN, Hui, Shenzhen Guangdong 518129 (CN); OUYANG, Guowei, Shenzhen Guangdong 518129 (CN); YI, Qiang, Shenzhen Guangdong 518129 (CN)
(74) Representative: Thun, Clemens
(86) International application number: PCT/CN2015/072043
(87) International publication number: WO 2016/119259

(56) References cited:
- WO-A1-2014/158006
- WO-A2-2014/071140
- CN-A- 104 012 012
- CN-A- 104 185 301
- "3rd Generation Partnership Project; Technical Specification Group Services and System Aspects; Study on architecture enhancements to support Proximity-based Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 10 March 2014 (2014-03-10), pages 1-324, XP051293271, [retrieved on 2014-03-10]
- DEUTSCHE TELEKOM: "Examples of Application Driven Discovery", 3GPP DRAFT; S2-144227, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2 17 November 2014 (2014-11-17), XP050881366, Retrieved from the Internet: URL:http://www.3gpp.org/ftp/Meetings_3GPP_ SYNC/SA2/Docs/ [retrieved on 2014-11-17]
- "3rd Generation Partnership Project; Technical Specification Group Services and System Aspects; Proximity-based services (ProSe); Stage 2 (Release 12)", 3GPP STANDARD; 3GPP TS 23.303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.3.0, 5 December 2014 (2014-12-05), pages 1-62, XP050926883, [retrieved on 2014-12-05]
- Rainer Liebhart ET AL: "Proximity Services" In: "LTE for public safety", 31 July 2015 (2015-07-31), Wiley, UK, XP055238717, ISBN: 978-1-118-82986-8 pages 85-155, DOI: 10.1002/9781118829851.ch4, * paragraph [4.5.3] *
- INTERDIGITAL COMMUNICATIONS: "Support for partial matching in Model A restricted discovery", 3GPP DRAFT; S2-144129_PROSE_RESTRICTED_MODEL_A__PARTIA L_MATCH_1_0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. SA WG2, no. San Francisco, USA; 20141117 - 20141121 13 November 2014 (2014-11-13), XP050892021, Retrieved from the Internet: URL:http://www.3gpp.org/ftp/tsg_sa/WG2_Arc h/TSGS2_106_San_Francisco/Docs/ [retrieved on 2014-11-13]
- ORANGE: "Addition of Service Group Identifier", 3GPP DRAFT; C1-150394 - C1_SERVICE ID - PROSE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Sorrento; 20150202 - 20150206 26 January 2015 (2015-01-26), XP050946116, Retrieved from the Internet: URL:http://www.3gpp.org/ftp/tsg_ct/WG1_mm- cc-sm_ex-CN1/TSGC1_90_Sorrento/docs/ [retrieved on 2015-01-26]
- '3rd Generation Partnership Project; Technical Specification Group Services and System Aspects; Proximity-based services (ProSe); Stage 2 (Release 12)' 3GPP TS 23.303 V12.0.0 28 February 2014, XP050769625

## Description

### TECHNICAL FIELD

The present invention relates to the field of communications technologies, and in particular, to a terminal discovery method and a device.

### BACKGROUND

In a conventional mobile network, a data communication path between terminals needs to go through a core network entity serving gateway (English: Serving Gateway, SGW for short)/packet data gateway (English: Packet Data Network Gateway, PGW for short). In this case, data transmission also needs to go through a core network when being performed by two terminals that are quite close to each other, and data transmission efficiency is low.

To resolve this problem, a proximity service (English: Proximity Services, ProSe for short) topic is proposed in the industry, so that data transmission can be directly performed by the two terminals that are relatively close to each other without going through the core network, and efficiency of data transmission between terminals that are relatively close to each other can be improved. That the terminals discover each other is an important part of a ProSe, and is also a premise of the data transmission between the terminals.

For example, 3GPP TR 23.703 V12.0.0 (2014-02) refers to a stage 2 study and evaluation of possible 3GPP technical system solutions for architectural enhancements needed to support proximity based services (ProSe) based on the relevant stage 1 requirements as defined in TS 22.278 and TS 22.115.

Further, S2-144227, 17-21 November 2014, discusses possible uses of application driven discovery types.

It is assumed that a terminal 1 and a terminal 2 are two terminals that are quite close to each other, the terminal 1 performs broadcasting, and the terminal 2 performs monitoring. In the prior art, a process of discovering the terminal 1 by the terminal 2 may include: the terminal 1 obtains a user code word of the terminal 1 and broadcasts the user code word; the terminal 2 first obtains the user code word of the terminal 1, and then filters, by using the user code word, the user code word of the terminal 1 from all user code words detected by the terminal 2; the terminal 2 sends the filtered user code word of the terminal 1 to a ProSe entity; and the ProSe entity searches for a correspondence between a user code word and a terminal identifier according to the received user code word of the terminal 1, obtains a terminal identifier of the terminal 1, and sends the obtained terminal identifier of the terminal 1 to the terminal 2. In this way, the terminal 2 can discover the terminal 1 according to an identifier of the terminal 1.

However, the foregoing process has the following problem: When the terminal 2 needs to monitor multiple terminals (for example, the terminal 2 needs to monitor 20 terminals), the terminal 2 may obtain user code words of the 20 terminals, and the terminal 2 needs to filter, by using 20 user code words separately, the 20 user code words that need to be monitored by the terminal 2 from all the user code words detected by the terminal 2. Generally, a quantity of user code words that can be detected by a terminal is relatively large (for example, the terminal 2 can detect 1000 user code words), that is, the terminal 2 needs to filter, by using the 20 user code words separately, the 20 user code words that need to be monitored by the terminal 2 from the 1000 user code words detected by the terminal 2. A process of filtering the user code word by the terminal 2 is relatively complex, and energy consumption of the terminal 2 is increased.

### SUMMARY

Embodiments of the present invention provide a terminal discovery method and a device, to resolve a problem that a process of filtering a user code word is relatively complex when a terminal needs to monitor multiple terminals. This problem is solved by the subject matter of the independent claims. Further implementation forms can be found in the dependent claims.

According to the terminal discovery method and the device provided in the embodiments of the present invention, a first ProSe entity receives a first message sent by a first terminal, where the first message carries a group identifier of a group in which a terminal to be monitored by the first terminal is located; the first ProSe entity obtains, according to the group identifier, a group code word of the group in which the terminal to be monitored by the first terminal is located; the first ProSe entity sends a second message to the first terminal, where the second message carries the group code word; the first ProSe entity receives a third message sent by the first terminal, where the third message carries at least one first broadcast code word, the first broadcast code word is a broadcast code word that is of broadcast code words detected by the first terminal and that includes the group code word, and the first broadcast code word further includes a user code word of a terminal that broadcasts the first broadcast code word; and the first ProSe entity obtains, according to the user code word, a terminal identifier of the terminal that broadcasts the first broadcast code word, and sends a fourth message to the first terminal, where the fourth message carries the terminal identifier.

Because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts. FIG. 1 is a flowchart of a terminal discovery method according to an embodiment ; FIG. 2 is a flowchart of another terminal discovery method according to an embodiment ; FIG. 3 is a flowchart of another terminal discovery method according to an embodiment ; FIG. 4 is a flowchart of another terminal discovery method according to an embodiment ; FIG. 5 is a flowchart of another terminal discovery method according to an embodiment ; FIG. 6 is a flowchart of another terminal discovery method according to an embodiment ; FIG. 7 is a flowchart of another terminal discovery method according to an embodiment ; FIG. 8 is a flowchart of another terminal discovery method according to an embodiment ; FIG. 9 is a flowchart of another terminal discovery method according to an embodiment ; FIG. 10 is a flowchart of another terminal discovery method according to an embodiment; FIG. 11 is a schematic diagram of composition of a device for implementing a function of a first ProSe entity according to an embodiment ; FIG. 12 is a schematic diagram of composition of another device for implementing a function of a first ProSe entity according to an embodiment ; FIG. 13 is a schematic diagram of composition of another device for implementing a function of a first ProSe entity according to an embodiment; FIG. 14 is a schematic diagram of composition of a first terminal according to an embodiment; FIG. 15 is a schematic diagram of composition of a device for implementing a function of a third ProSe entity according to an embodiment; FIG. 16 is a schematic diagram of composition of another device for implementing a function of a third ProSe entity according to an embodiment of the present invention; FIG. 17 is a schematic diagram of composition of another device for implementing a function of a third ProSe entity according to an embodiment of the present invention; FIG. 18 is a schematic diagram of composition of a third terminal according to an embodiment; FIG. 19 is a schematic diagram of composition of another device for implementing a function of a first ProSe entity according to an embodiment ; FIG. 20 is a schematic diagram of composition of another first terminal according to an embodiment; FIG. 21 is a schematic diagram of composition of another device for implementing a function of a third ProSe entity according to an embodiment ; and FIG. 22 is a schematic diagram of composition of another third terminal according to an embodiment.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

To facilitate clear description of the technical solutions in the embodiments of the present invention, words such as "first", "second", and "third" are used in the embodiments of the present invention to distinguish between same items and similar items that have basically same functions and purposes. Persons skilled in the art may understand that the words such as "first", "second", and "third" do not limit a quantity and an execution order.

In addition, for brief descriptions of the following embodiments, the following provides several related definitions:
First terminal: a terminal for performing monitoring.
Second terminal: a group management device of a group in which a terminal to be monitored by the first terminal is located. When the first terminal and the terminal to be monitored by the first terminal are in a same group, and the first terminal is the group management device of the group, the first terminal is the second terminal.
Third terminal: a terminal for performing broadcasting. The terminal to be monitored by the first terminal includes the third terminal. When the third terminal is a group management device of a group in which the third terminal is located, the third terminal is the second terminal.

First ProSe entity: a ProSe entity in a home public land mobile network (English: Home Public Land Mobile Networks, HPLMN for short) of the first terminal. The ProSe entity is an entity that is in a core network and that is responsible for a ProSe. The ProSe entity may be an independent device, or may be carried on another core network device.
Second ProSe entity: a ProSe entity in an HPLMN of the second terminal. When the first terminal and the second terminal are a same terminal, or the HPLMN of the first terminal and the HPLMN of the second terminal are the same, the first ProSe entity and the second ProSe entity are a same ProSe entity.
Third ProSe entity: a ProSe entity in an HPLMN of the third terminal. When the third terminal and the second terminal are a same terminal, or the HPLMN of the third terminal and the HPLMN of the second terminal are the same, the third ProSe entity and the second ProSe entity are a same ProSe entity. When the HPLMN of the third terminal and the HPLMN of the first terminal are the same, the third ProSe entity and the first ProSe entity are a same ProSe entity.

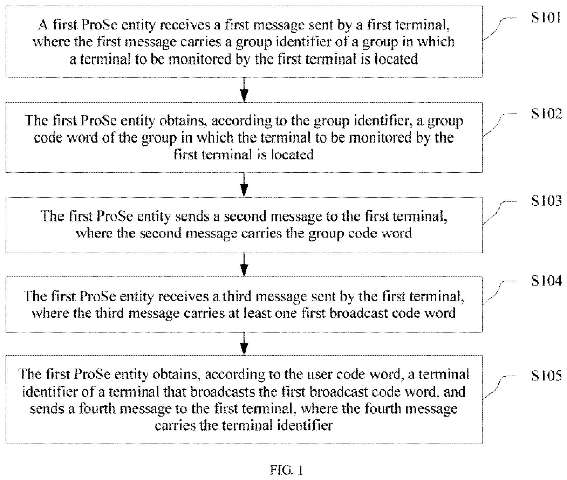

As shown in FIG. 1, an embodiment of the present invention provides a terminal discovery method, including:
S101. A first ProSe entity receives a first message sent by a first terminal, where the first message carries a group identifier of a group in which a terminal to be monitored by the first terminal is located.

Specifically, the first message may be a discovery request message. The first message is not specifically limited in this embodiment of the present invention.

The group identifier may be an application group identifier (English: Application Layer Group ID) of the group in which the terminal to be monitored by the first terminal is located, or may be a temporary identifier allocated by an application server to the group in which the terminal to be monitored by the first terminal is located.

The application group identifier is an identifier of a group in an application, and the application group identifier is valid in the application in the long term. The application group identifier may have different representation manners in different applications. For example, the application group identifier is represented by using a group number in one application, and the application group identifier is represented by using a group name in another application.

The application group identifier of the group in which the terminal to be monitored by the first terminal is located may be an application group identifier created by the first terminal, or may be an application group identifier created by a group management device (a second terminal) of the group in which the terminal to be monitored by the first terminal is located, and any terminal of the group in which the terminal to be monitored by the first terminal is located notifies the first terminal of the application group identifier.

The first terminal may send, to the application server, a message that carries the application group identifier of the group in which the terminal to be monitored by the first terminal is located, to obtain the temporary identifier allocated by the application server to the group in which the terminal to be monitored by the first terminal is located. The temporary identifier may include an identifier of an HPLMN of the second terminal. The temporary identifier may have a life cycle, such as one day, that is, the temporary identifier is available in one day.

For example, the terminal to be monitored by the first terminal includes a terminal 1 and a terminal 2, and the terminal 1 and the terminal 2 are in a same group. A group number of the group in which the terminal 1 and the terminal 2 are located is 1234567, a group name is a friend group 1, and a temporary identifier allocated by the application server to the group in which the terminal 1 and the terminal 2 are located is 001. In this case, the group identifier in this embodiment of the present invention may be 1234567, or may be the friend group 1, or may be 0001. When the terminal 1 and the terminal 2 are not in a same group, the group identifier in this embodiment of the present invention includes a group identifier of a group in which the terminal 1 is located and a group identifier of a group in which the terminal 2 is located.

It should be noted that the first message may further carry information such as a terminal identifier of the first terminal or an application identifier of the application server. Other information carried in the first message is not specifically limited in this embodiment of the present invention.

S102. The first ProSe entity obtains, according to the group identifier, a group code word of the group in which the terminal to be monitored by the first terminal is located.

The group code word is a code word that is allocated by the application server to the group in which the terminal to be monitored by the first terminal is located, and that is sent to the first terminal by using a ProSe entity in an HPLMN of the terminal to be monitored by the first terminal; or the group code word is a code word that is allocated by a second ProSe entity (that is, a ProSe entity in an HPLMN of a group management device of a group in which the terminal to be monitored by the first terminal is located) to the group in which the terminal to be monitored by the first terminal is located, and that is sent to the first terminal by using the ProSe entity in the HPLMN of the terminal to be monitored by the first terminal. A broadcast code word of the terminal to be monitored by the first terminal is a broadcast code word that includes the group code word and that is allocated by the ProSe entity in the HPLMN of the terminal to be monitored by the first terminal.

S103. The first ProSe entity sends a second message to the first terminal, where the second message carries the group code word.

S104. The first ProSe entity receives a third message sent by the first terminal, where the third message carries at least one first broadcast code word.

The first broadcast code word is a broadcast code word that is of broadcast code words detected by the first terminal and that includes the group code word, and the first broadcast code word further includes a user code word of a terminal that broadcasts the first broadcast code word.

The user code word is the same as a user code word in the prior art, and a total length of the user code word is 184 bits (English: bit). Generally, the user code word includes some idle bits that are not occupied. The user code word is a code word allocated by a ProSe entity in an HPLMN of the terminal that broadcasts the first broadcast code word to the terminal that broadcasts the first broadcast code word.

The first terminal may simultaneously detect broadcast code words broadcasted by multiple other terminals (terminals that are different from the first terminal), and there may be multiple broadcast code words obtained by the first terminal by filtering, by using the group code word, the broadcast code words detected by the first terminal, that is, there is at least one first broadcast code word. User code words included in first broadcast code words broadcasted by different terminals may be different. When the first terminal sends multiple first broadcast code words that include the group code word to the first ProSe entity, the first ProSe entity may obtain multiple different user code words according to the multiple first broadcast code words.

Different from that in the prior art, what any terminal broadcasts in the prior art is the user code word, and what any terminal broadcasts in this embodiment of the present invention is the broadcast code word that includes the group code word and the user code word.

S105. The first ProSe entity obtains, according to the user code word, a terminal identifier of the terminal that broadcasts the first broadcast code word, and sends a fourth message to the first terminal, where the fourth message carries the terminal identifier.

In this way, the first terminal can discover a terminal indicated by the terminal identifier carried in the fourth message.

The user code word may include an identifier of an HPLMN of the terminal that broadcasts the first broadcast code word. The first ProSe entity may pre-store a correspondence between a terminal identifier of the first terminal and a user code word of the first terminal. If the HPLMN of the terminal that broadcasts the first broadcast code word is the same as the HPLMN of the first terminal, the first ProSe entity may search for a correspondence between a terminal identifier and a user code word according to the user code word of the terminal that broadcasts the first broadcast code word, to obtain the terminal identifier of the terminal that broadcasts the first broadcast code word. If the HPLMN of the terminal that broadcasts the first broadcast code word is different from the HPLMN of the first terminal, the first ProSe entity may send, according to the identifier that is of the HPLMN and that is included in the user code word, a terminal identifier request message to the ProSe entity in the HPLMN of the terminal that broadcasts the first broadcast code word, to obtain the terminal identifier of the terminal that broadcasts the first broadcast code word.

Similar to the group identifier, the terminal identifier of the terminal that broadcasts the first broadcast code word may be an application user identifier (English: Application Layer User ID) of the terminal that broadcasts the first broadcast code word, or may be a temporary identifier allocated by the application server to the terminal that broadcasts the first broadcast code word.

The application user identifier is an identifier of a terminal in an application, and the application user identifier is valid in the application in the long term. The application user identifier may be a group number, a user name, or the like.

The temporary identifier allocated by the application server to the terminal that broadcasts the first broadcast code word may have a life cycle, such as one day, that is, the temporary identifier is available in one day.

According to the terminal discovery method provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

Further, in S102, there are three cases in which the first ProSe entity obtains, according to the group identifier, a group code word of the group in which the terminal to be monitored by the first terminal is located.

When the group code word is the code word allocated by the application server to the group in which the terminal to be monitored by the first terminal is located, S102 may specifically include:
S102a. The first ProSe entity sends a fifth message to the application server, where the fifth message carries the group identifier.

The fifth message is used to request the application server to allocate a code word to the group in which the terminal to be monitored by the first terminal is located.

S102b. The first ProSe entity receives a sixth message sent by the application server, where the sixth message carries the group code word.

When the group code word is the code word allocated by the second ProSe entity to the group in which the terminal to be monitored by the first terminal is located, and the first ProSe entity and the second ProSe entity are a same ProSe entity (that is, the first terminal and the second terminal belong to a same HPLMN, the second terminal is the group management device of the group in which the terminal to be monitored by the first terminal is located, and the second ProSe entity is the ProSe entity in the HPLMN of the second terminal), S102 may specifically include:
S102c. The first ProSe entity generates the group code word according to the group identifier.

When the group code word is the code word allocated by the second ProSe entity to the group in which the terminal to be monitored by the first terminal is located, and the first terminal and the second terminal belong to different HPLMNs, S102 may specifically include:
S102d. The first ProSe entity sends a seventh message to the second ProSe entity, where the seventh message carries the group identifier.

The seventh message is used to request the second ProSe entity to allocate a code word to the group in which the terminal to be monitored by the first terminal is located.

S102e. The first ProSe entity receives an eighth message sent by the second ProSe entity, where the eighth message carries the group code word.

In a preferred solution of this embodiment of the present invention, the group identifier is a temporary identifier allocated by the application server to the group in which the terminal to be monitored by the first terminal is located, and the terminal identifier is a temporary identifier allocated by the application server to the terminal that broadcasts the first broadcast code word. In this solution, the application group identifier and the application user identifier are invisible to the first ProSe entity, and this may prevent private information such as the application group identifier and the application user identifier from being leaked to a third-party mobile operator (a mobile operator that provides the first ProSe entity).

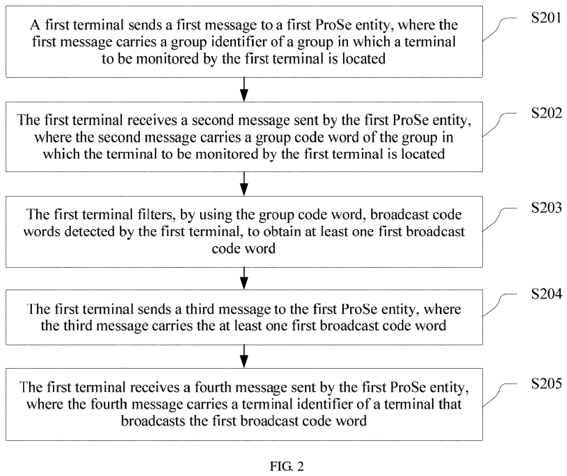

As shown in FIG 2, an embodiment of the present invention further provides a terminal discovery method, including:
S201. A first terminal sends a first message to a first ProSe entity, where the first message carries a group identifier of a group in which a terminal to be monitored by the first terminal is located.
S202. The first terminal receives a second message sent by the first ProSe entity, where the second message carries a group code word of the group in which the terminal to be monitored by the first terminal is located.
S203. The first terminal filters, by using the group code word, broadcast code words detected by the first terminal, to obtain at least one first broadcast code word.

The first broadcast code word includes the group code word.

S204. The first terminal sends a third message to the first ProSe entity, where the third message carries the at least one first broadcast code word.

S205. The first terminal receives a fourth message sent by the first ProSe entity, where the fourth message carries a terminal identifier of a terminal that broadcasts the first broadcast code word.

In this way, the first terminal can discover the terminal that broadcasts the first broadcast code word.

It should be noted that for specific descriptions of the first message, the group code word, the terminal identifier, and the like in this embodiment of the present invention, refer to related descriptions in the foregoing embodiment, and details are not described in this embodiment of the present invention again.

According to the terminal discovery method provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

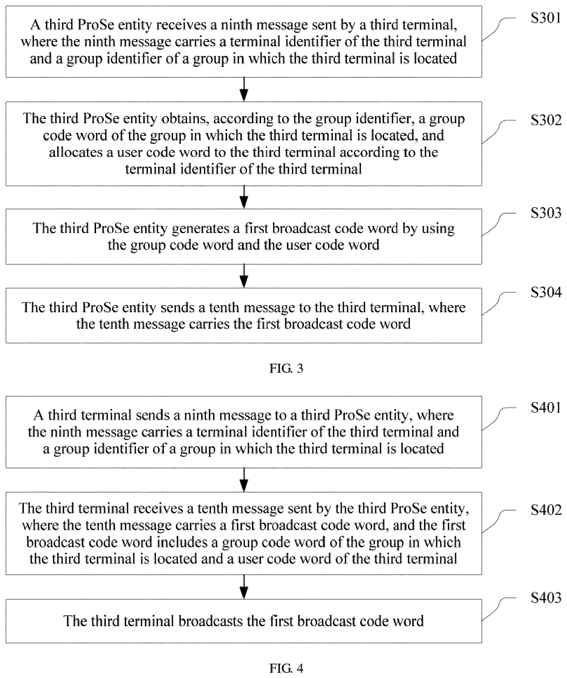

An embodiment of the present invention further provides a terminal discovery method, where a third terminal is a terminal to be monitored by a first terminal. As shown in FIG. 3, the method includes the following steps:
S301. A third ProSe entity receives a ninth message sent by a third terminal, where the ninth message carries a terminal identifier of the third terminal and a group identifier of a group in which the third terminal is located.

The third ProSe entity is a ProSe entity in an HPLMN of the third terminal.

S302. The third ProSe entity obtains, according to the group identifier, a group code word of the group in which the third terminal is located, and allocates a user code word to the third terminal according to the terminal identifier of the third terminal.

The group code word is a code word that is allocated by an application server to the group in which the third terminal is located, and that is sent to the third terminal by using the third ProSe entity, or the group code word is a code word that is allocated by a second ProSe entity to the group in which the third terminal is located, and that is sent to the third terminal by using the third ProSe entity. The user code word is the same as a user code word in the prior art, and a total length of the user code word is 184 bits (English: bit). Generally, the user code word includes some idle bits that are not occupied.

S303. The third ProSe entity generates a first broadcast code word by using the group code word and the user code word.

Specifically, the third ProSe entity may write the group code word into an idle bit of the user code word to generate the first broadcast code word.

S304. The third ProSe entity sends a tenth message to the third terminal, where the tenth message carries the first broadcast code word.

The tenth message is used to instruct the third terminal to broadcast the first broadcast code word, so that a first terminal monitors the first broadcast code word and discovers the third terminal.

It should be noted that for specific descriptions of the group identifier, the terminal identifier, and the like in this embodiment of the present invention, refer to related descriptions in the foregoing embodiments, and details are not described in this embodiment of the present invention again.

According to the terminal discovery method provided in this embodiment of the present invention, a first broadcast code word allocated by a third ProSe entity to a third terminal includes a group code word. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

Further, in S302, there are three cases in which the third ProSe entity obtains, according to the group identifier, a group code word of the group in which the third terminal is located.

When the group code word is the code word allocated by the application server to the group in which the third terminal is located, S302 may specifically include:
S302a. The third ProSe entity sends an eleventh message to the application server, where the eleventh message carries the group identifier.

The eleventh message is used to request the application server to allocate a code word to the group in which the third terminal is located.

S302b. The third ProSe entity receives a twelfth message sent by the application server, where the twelfth message carries the group code word.

When the group code word is the code word allocated by the second ProSe entity to the group in which the third terminal is located, and the third ProSe entity and the second ProSe entity are a same ProSe entity (that is, the third terminal and a second terminal belong to a same HPLMN, the second terminal is a group management device of the group in which the third terminal is located, and the second ProSe entity is a ProSe entity in an HPLMN of the second terminal), S302 may specifically include:
S302c. The third ProSe entity generates the group code word according to the group identifier.

When the group code word is the code word allocated by the second ProSe entity to the group in which the third terminal is located, and the third terminal and the second terminal belong to different HPLMNs, S302 may specifically include:
S302d. The third ProSe entity sends a thirteenth message to the second ProSe entity, where the thirteenth message carries the group identifier.

The thirteenth message is used to request the second ProSe entity to allocate a code word to the group in which the third terminal is located.

S302e. The third ProSe entity receives a fourteenth message sent by the second ProSe entity, where the fourteenth message carries the group code word.

In a preferred solution of this embodiment of the present invention, the group identifier is a temporary identifier allocated by the application server to the group in which the third terminal is located, and the terminal identifier is a temporary identifier allocated by the application server to the terminal that broadcasts the first broadcast code word. In this solution, an application group identifier and an application user identifier are invisible to the third ProSe entity, and this may prevent private information such as the application group identifier and the application user identifier from being leaked to a third-party mobile operator (a mobile operator that provides the third ProSe entity).

An embodiment of the present invention further provides a terminal discovery method, where a third terminal is a terminal to be monitored by a first terminal. As shown in FIG. 4, the method includes the following steps:
S401. A third terminal sends a ninth message to a third ProSe entity, where the ninth message carries a terminal identifier of the third terminal and a group identifier of a group in which the third terminal is located.
S402. The third terminal receives a tenth message sent by the third ProSe entity, where the tenth message carries a first broadcast code word, and the first broadcast code word includes a group code word of the group in which the third terminal is located and a user code word of the third terminal.
S403. The third terminal broadcasts the first broadcast code word.

It should be noted that for specific descriptions of the group identifier, the group code word, the user code word, the terminal identifier, and the like in this embodiment of the present invention, refer to related descriptions in the foregoing embodiments, and details are not described in this embodiment of the present invention again.

According to the terminal discovery method provided in this embodiment of the present invention, a first broadcast code word broadcasted by a third terminal includes a group code word of a group in which the third terminal is located and a user code word of the third terminal. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

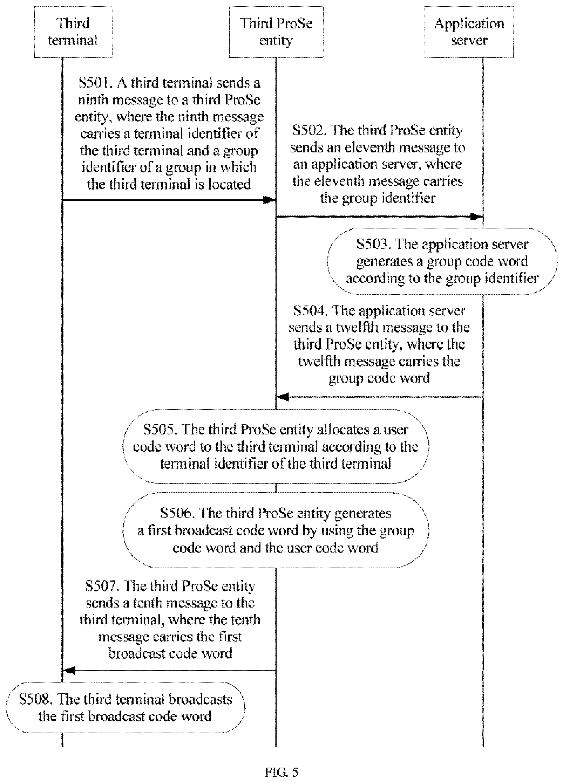

An embodiment of the present invention further provides a terminal discovery method. Specifically, interaction between a third terminal, a third ProSe entity, and an application server is used as an example for description, and a group code word is a code word allocated by the application server to a group in which the third terminal is located. As shown in FIG 5, the method includes the following steps:
S501. A third terminal sends a ninth message to a third ProSe entity, where the ninth message carries a terminal identifier of the third terminal and a group identifier of a group in which the third terminal is located.

The third ProSe entity is a ProSe entity in an HPLMN of the third terminal.

S502. The third ProSe entity sends an eleventh message to an application server, where the eleventh message carries the group identifier.

The eleventh message is used to request the application server to allocate a code word to the group in which the third terminal is located.

S503. The application server generates a group code word according to the group identifier.

S504. The application server sends a twelfth message to the third ProSe entity, where the twelfth message carries the group code word.

S505. The third ProSe entity allocates a user code word to the third terminal according to the terminal identifier of the third terminal.

S506. The third ProSe entity generates a first broadcast code word by using the group code word and the user code word.

S507. The third ProSe entity sends a tenth message to the third terminal, where the tenth message carries the first broadcast code word.

The tenth message is used to instruct the third terminal to broadcast the first broadcast code word.

S508. The third terminal broadcasts the first broadcast code word.

It should be noted that for specific descriptions of the group identifier, the group code word, the user code word, the terminal identifier, and the like in this embodiment of the present invention, refer to related descriptions in the foregoing embodiments, and details are not described in this embodiment of the present invention again.

According to the terminal discovery method provided in this embodiment of the present invention, a first broadcast code word allocated by a third ProSe entity to a third terminal includes a group code word. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

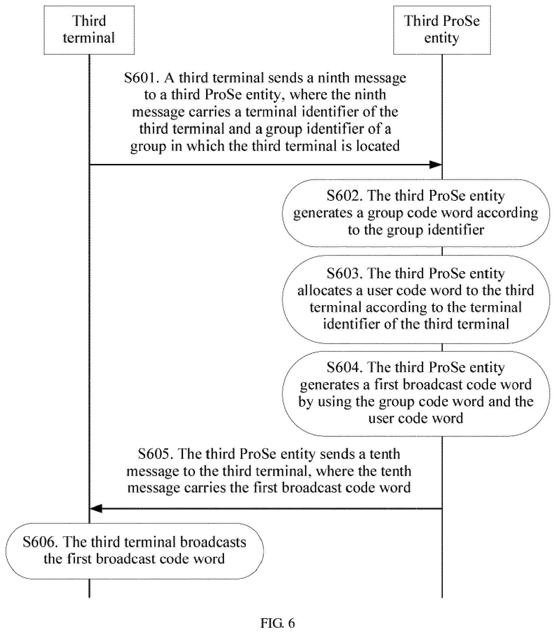

An embodiment of the present invention further provides a terminal discovery method. Specifically, interaction between a third terminal and a third ProSe entity is used as an example for description, a group code word is a code word allocated by a second ProSe entity to a group in which the third terminal is located, and the third ProSe entity and the second ProSe entity are a same ProSe entity. As shown in FIG. 6, the method includes the following steps:
S601. A third terminal sends a ninth message to a third ProSe entity, where the ninth message carries a terminal identifier of the third terminal and a group identifier of a group in which the third terminal is located.

The third ProSe entity is a ProSe entity in an HPLMN of the third terminal.

S602. The third ProSe entity generates a group code word according to the group identifier.

S603. The third ProSe entity allocates a user code word to the third terminal according to the terminal identifier of the third terminal.

S604. The third ProSe entity generates a first broadcast code word by using the group code word and the user code word.

S605. The third ProSe entity sends a tenth message to the third terminal, where the tenth message carries the first broadcast code word.

The tenth message is used to instruct the third terminal to broadcast the first broadcast code word.

S606. The third terminal broadcasts the first broadcast code word.

It should be noted that for specific descriptions of the group identifier, the group code word, the user code word, the terminal identifier, and the like in this embodiment of the present invention, refer to related descriptions in the foregoing embodiments, and details are not described in this embodiment of the present invention again.

According to the terminal discovery method provided in this embodiment of the present invention, a first broadcast code word allocated by a third ProSe entity to a third terminal includes a group code word. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

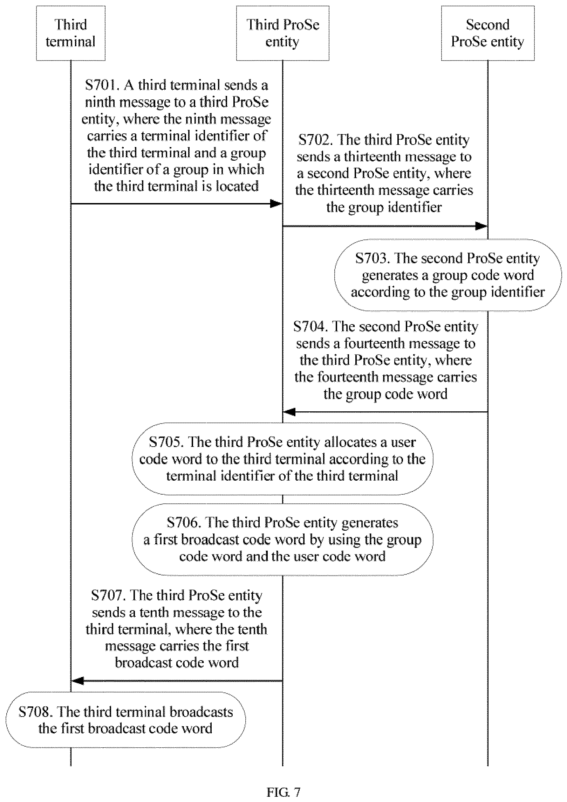

An embodiment of the present invention further provides a terminal discovery method. Specifically, interaction between a third terminal, a third ProSe entity, and a second ProSe entity is used as an example for description, a group code word is a code word allocated by the second ProSe entity to a group in which the third terminal is located, and the third ProSe entity and the second ProSe entity are different. As shown in FIG. 7, the method includes the following steps:
S701. A third terminal sends a ninth message to a third ProSe entity, where the ninth message carries a terminal identifier of the third terminal and a group identifier of a group in which the third terminal is located.

The third ProSe entity is a ProSe entity in an HPLMN of the third terminal.

S702. The third ProSe entity sends a thirteenth message to a second ProSe entity, where the thirteenth message carries the group identifier.

The thirteenth message is used to request the second ProSe entity to allocate a code word to the group in which the third terminal is located, the second ProSe entity is a ProSe entity in an HPLMN of a second terminal, and the second terminal is a group management device of the group in which the third terminal is located.

S703. The second ProSe entity generates a group code word according to the group identifier.

S704. The second ProSe entity sends a fourteenth message to the third ProSe entity, where the fourteenth message carries the group code word.

S705. The third ProSe entity allocates a user code word to the third terminal according to the terminal identifier of the third terminal.

S706. The third ProSe entity generates a first broadcast code word by using the group code word and the user code word.

S707. The third ProSe entity sends a tenth message to the third terminal, where the tenth message carries the first broadcast code word.

The tenth message is used to instruct the third terminal to broadcast the first broadcast code word.

S708. The third terminal broadcasts the first broadcast code word.

It should be noted that for specific descriptions of the group identifier, the group code word, the user code word, the terminal identifier, and the like in this embodiment of the present invention, refer to related descriptions in the foregoing embodiments, and details are not described in this embodiment of the present invention again.

According to the terminal discovery method provided in this embodiment of the present invention, a first broadcast code word allocated by a third ProSe entity to a third terminal includes a group code word. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

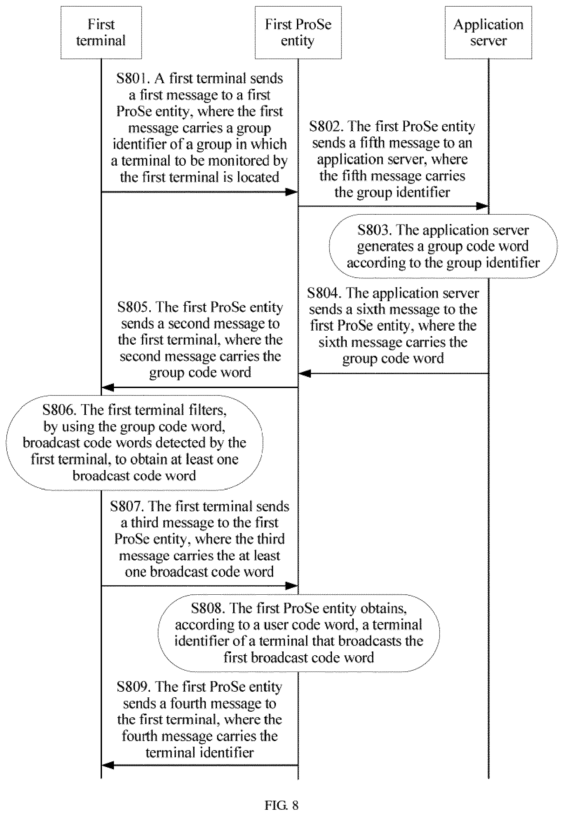

An embodiment of the present invention further provides a terminal discovery method. Specifically, interaction between a first terminal, a first ProSe entity, and an application server is used as an example for description, and a group code word is a code word allocated by the application server to a group in which a terminal to be monitored by the first terminal is located. As shown in FIG. 8, the method includes the following steps:

S801. A first terminal sends a first message to a first ProSe entity, where the first message carries a group identifier of a group in which a terminal to be monitored by the first terminal is located.

S802. The first ProSe entity sends a fifth message to an application server, where the fifth message carries the group identifier.

The fifth message is used to request the application server to allocate a code word to the group in which the terminal to be monitored by the first terminal is located.

S803. The application server generates a group code word according to the group identifier.

S804. The application server sends a sixth message to the first ProSe entity, where the sixth message carries the group code word.

S805. The first ProSe entity sends a second message to the first terminal, where the second message carries the group code word.

S806. The first terminal filters, by using the group code word, broadcast code words detected by the first terminal, to obtain at least one broadcast code word.

The first broadcast code word further includes a user code word of a terminal that broadcasts the first broadcast code word.

S807. The first terminal sends a third message to the first ProSe entity, where the third message carries the at least one broadcast code word.

S808. The first ProSe entity obtains, according to the user code word, a terminal identifier of the terminal that broadcasts the first broadcast code word.

S809. The first ProSe entity sends a fourth message to the first terminal, where the fourth message carries the terminal identifier.

It should be noted that for specific descriptions of the group identifier, the group code word, the user code word, the terminal identifier, and the like in this embodiment of the present invention, refer to related descriptions in the foregoing embodiments, and details are not described in this embodiment of the present invention again.

According to the terminal discovery method provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

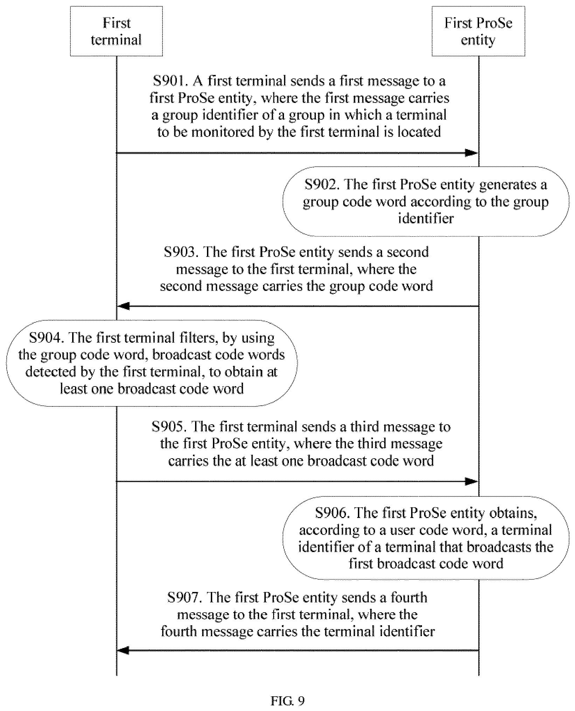

An embodiment of the present invention further provides a terminal discovery method. Specifically, interaction between a first terminal and a first ProSe entity is used as an example for description, a group code word is a code word allocated by a second ProSe entity to a group in which a terminal to be monitored by the first terminal is located, and the first ProSe entity and the second ProSe entity are a same ProSe entity. As shown in FIG. 9, the method includes the following steps:
S901. A first terminal sends a first message to a first ProSe entity, where the first message carries a group identifier of a group in which a terminal to be monitored by the first terminal is located.
S902. The first ProSe entity generates a group code word according to the group identifier.
S903. The first ProSe entity sends a second message to the first terminal, where the second message carries the group code word.
S904. The first terminal filters, by using the group code word, broadcast code words detected by the first terminal, to obtain at least one broadcast code word.

The first broadcast code word further includes a user code word of a terminal that broadcasts the first broadcast code word.

S905. The first terminal sends a third message to the first ProSe entity, where the third message carries the at least one broadcast code word.

S906. The first ProSe entity obtains, according to the user code word, a terminal identifier of the terminal that broadcasts the first broadcast code word.

S907. The first ProSe entity sends a fourth message to the first terminal, where the fourth message carries the terminal identifier.

It should be noted that for specific descriptions of the group identifier, the group code word, the user code word, the terminal identifier, and the like in this embodiment of the present invention, refer to related descriptions in the foregoing embodiments, and details are not described in this embodiment of the present invention again.

According to the terminal discovery method provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

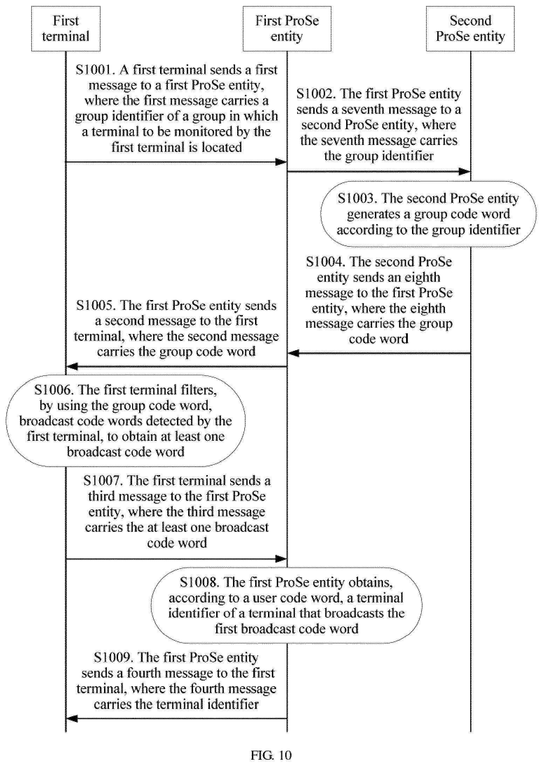

An embodiment of the present invention further provides a terminal discovery method. Specifically, interaction between a first terminal, a first ProSe entity, and a second ProSe entity is used as an example for description, a group code word is a code word allocated by the second ProSe entity to a group in which a terminal to be monitored by the first terminal is located, and the first ProSe entity and the second ProSe entity are different. As shown in FIG. 10, the method includes the following steps:
S1001. A first terminal sends a first message to a first ProSe entity, where the first message carries a group identifier of a group in which a terminal to be monitored by the first terminal is located.
S1002. The first ProSe entity sends a seventh message to a second ProSe entity, where the seventh message carries the group identifier.

The seventh message is used to request the second ProSe entity to allocate a code word to the group in which the terminal to be monitored by the first terminal is located, the second ProSe entity is a ProSe entity in an HPLMN of a second terminal, and the second terminal is a group management device of the group in which the terminal to be monitored by the first terminal is located.

S1003. The second ProSe entity generates a group code word according to the group identifier.

S1004. The second ProSe entity sends an eighth message to the first ProSe entity, where the eighth message carries the group code word.

S1005. The first ProSe entity sends a second message to the first terminal, where the second message carries the group code word.

S1006. The first terminal filters, by using the group code word, broadcast code words detected by the first terminal, to obtain at least one broadcast code word.

The first broadcast code word further includes a user code word of a terminal that broadcasts the first broadcast code word.

S1007. The first terminal sends a third message to the first ProSe entity, where the third message carries the at least one broadcast code word.

S1008. The first ProSe entity obtains, according to the user code word, a terminal identifier of the terminal that broadcasts the first broadcast code word.

S1009. The first ProSe entity sends a fourth message to the first terminal, where the fourth message carries the terminal identifier.

It should be noted that for specific descriptions of the group identifier, the group code word, the user code word, the terminal identifier, and the like in this embodiment of the present invention, refer to related descriptions in the foregoing embodiments, and details are not described in this embodiment of the present invention again.

According to the terminal discovery method provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

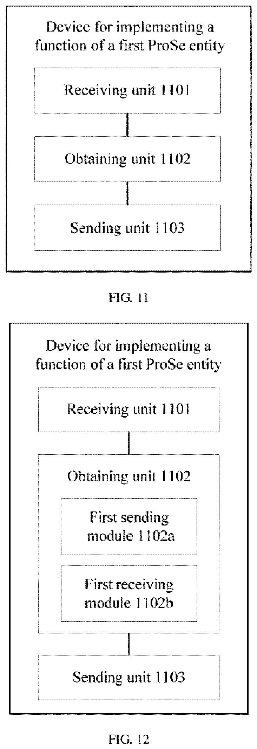

An embodiment of the present invention further provides a device for implementing a function of a first ProSe entity, configured to execute the terminal discovery methods shown in FIG. 1, FIG. 8, FIG 9, and FIG. 10. As shown in FIG. 11, the device includes a receiving unit 1101, an obtaining unit 1102, and a sending unit 1103.

The receiving unit 1101 is configured to receive a first message sent by a first terminal, where the first message carries a group identifier of a group in which a terminal to be monitored by the first terminal is located.

The obtaining unit 1102 is configured to obtain, according to the group identifier, a group code word of the group in which the terminal to be monitored by the first terminal is located.

The sending unit 1103 is configured to send a second message to the first terminal, where the second message carries the group code word.

The receiving unit 1101 is further configured to receive a third message sent by the first terminal, where the third message carries at least one first broadcast code word, the first broadcast code word is a broadcast code word that is of broadcast code words detected by the first terminal and that includes the group code word, and the first broadcast code word further includes a user code word of a terminal that broadcasts the first broadcast code word.

The obtaining unit 1102 is further configured to obtain, according to the user code word, a terminal identifier of the terminal that broadcasts the first broadcast code word.

The sending unit 1103 is further configured to send a fourth message to the first terminal, where the fourth message carries the terminal identifier.

Further, in a first case, as shown in FIG. 12, the obtaining unit 1102 includes a first sending module 1102a and a first receiving module 1102b.

The first sending module 1102a is configured to send a fifth message to an application server, where the fifth message carries the group identifier, and the fifth message is used to request the application server to allocate a code word to the group in which the terminal to be monitored by the first terminal is located.

The first receiving module 1102b is configured to receive a sixth message sent by the application server, where the sixth message carries the group code word.

Further, in a second case, the obtaining unit 1102 is specifically configured to generate the group code word according to the group identifier.

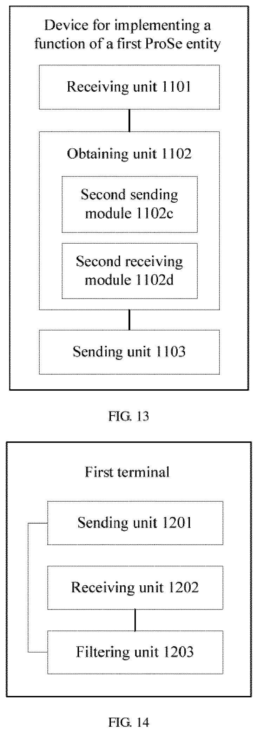

Further, in a third case, as shown in FIG. 13, the obtaining unit 1102 includes a second sending module 1102c and a second receiving module 1102d.

The second sending module 1102c is configured to send a seventh message to a second ProSe entity, where the seventh message carries the group identifier, the seventh message is used to request the second ProSe entity to allocate a code word to the group in which the terminal to be monitored by the first terminal is located, the second ProSe entity is a ProSe entity in an HPLMN of a second terminal, and the second terminal is a group management device of the group in which the terminal to be monitored by the first terminal is located.

The second receiving module 1102d is configured to receive an eighth message sent by the second ProSe entity, where the eighth message carries the group code word.

Preferably, the group identifier is a temporary identifier allocated by an application server to the group in which the terminal to be monitored by the first terminal is located, and the terminal identifier is a temporary identifier allocated by the application server to the terminal that broadcasts the first broadcast code word.

It should be noted that for specific descriptions of some function modules in the device for implementing a function of a first ProSe entity provided in this embodiment of the present invention, refer to corresponding content in the method embodiments, and details are not described in this embodiment again.

According to the device for implementing a function of a first ProSe entity provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

An embodiment of the present invention further provides a first terminal, configured to execute the terminal discovery methods shown in FIG. 2, FIG. 8, FIG. 9, and FIG. 10. As shown in FIG. 14, the first terminal includes a sending unit 1201, a receiving unit 1202, and a filtering unit 1203.

The sending unit 1201 is configured to send a first message to a first ProSe entity, where the first message carries a group identifier of a group in which a terminal to be monitored by the first terminal is located.

The receiving unit 1202 is configured to receive a second message sent by the first ProSe entity, where the second message carries a group code word of the group in which the terminal to be monitored by the first terminal is located.

The filtering unit 1203 is configured to filter, by using the group code word, broadcast code words detected by the first terminal, to obtain at least one first broadcast code word, where the first broadcast code word includes the group code word.

The sending unit 1201 is further configured to send a third message to the first ProSe entity, where the third message carries the at least one first broadcast code word.

The receiving unit 1202 is further configured to receive a fourth message sent by the first ProSe entity, where the fourth message carries a terminal identifier of a terminal that broadcasts the first broadcast code word.

Preferably, the group identifier is a temporary identifier allocated by an application server to the group in which the terminal to be monitored by the first terminal is located, and the terminal identifier is a temporary identifier allocated by the application server to the terminal that broadcasts the first broadcast code word.

It should be noted that for specific descriptions of some function modules in the first terminal provided in this embodiment of the present invention, refer to corresponding content in the method embodiments, and details are not described in this embodiment again.

According to the first terminal provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

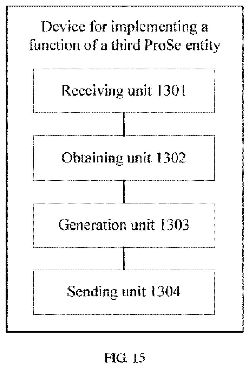

An embodiment of the present invention further provides a device for implementing a function of a third ProSe entity, configured to execute the terminal discovery methods shown in FIG. 3, FIG. 5, FIG. 6, and FIG. 7. As shown in FIG. 15, the device includes a receiving unit 1301, an obtaining unit 1302, a generation unit 1303, and a sending unit 1304.

The receiving unit 1301 is configured to receive a ninth message sent by a third terminal, where the ninth message carries a terminal identifier of the third terminal and a group identifier of a group in which the third terminal is located.

The obtaining unit 1302 is configured to obtain, according to the group identifier, a group code word of the group in which the third terminal is located, and allocate a user code word to the third terminal according to the terminal identifier of the third terminal.

The generation unit 1303 is configured to generate a first broadcast code word by using the group code word and the user code word.

The sending unit 1304 is configured to send a tenth message to the third terminal, where the tenth message carries the first broadcast code word, and the tenth message is used to instruct the third terminal to broadcast the first broadcast code word.

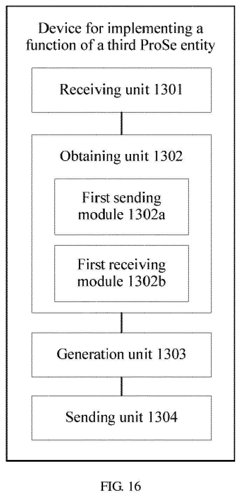

Further, in a first case, as shown in FIG. 16, the obtaining unit 1302 includes a first sending module 1302a and a first receiving module 1302b.

The first sending module 1302a is configured to send an eleventh message to an application server, where the eleventh message carries the group identifier, and the eleventh message is used to request the application server to allocate a code word to the group in which the third terminal is located.

The first receiving module 1302b is configured to receive a twelfth message sent by the application server, where the twelfth message carries the group code word.

Further, in a second case, the obtaining unit 1302 is specifically configured to generate the group code word according to the group identifier.

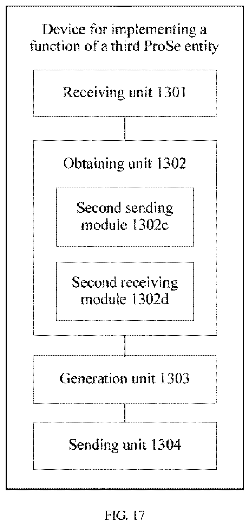

Further, in a third case, as shown in FIG. 17, the obtaining unit 1302 includes a second sending module 1302c and a second receiving module 1302d.

The second sending module 1302c is configured to send a thirteenth message to a second ProSe entity, where the thirteenth message carries the group identifier, the thirteenth message is used to request the second ProSe entity to allocate a code word to the group in which the third terminal is located, the second ProSe entity is a ProSe entity in an HPLMN of a second terminal, and the second terminal is a group management device of the group in which the third terminal is located.

The second receiving module 1302d is configured to receive a fourteenth message sent by the second ProSe entity, where the fourteenth message carries the group code word.

Preferably, the group identifier is a temporary identifier allocated by an application server to the group in which the third terminal is located, and the terminal identifier of the third terminal is a temporary identifier allocated by the application server to the third terminal.

It should be noted that for specific descriptions of some function modules in the device for implementing a function of a third ProSe entity provided in this embodiment of the present invention, refer to corresponding content in the method embodiments, and details are not described in this embodiment again.

According to the device for implementing a function of a third ProSe entity provided in this embodiment of the present invention, a first broadcast code word allocated by a third ProSe entity to a third terminal includes a group code word. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

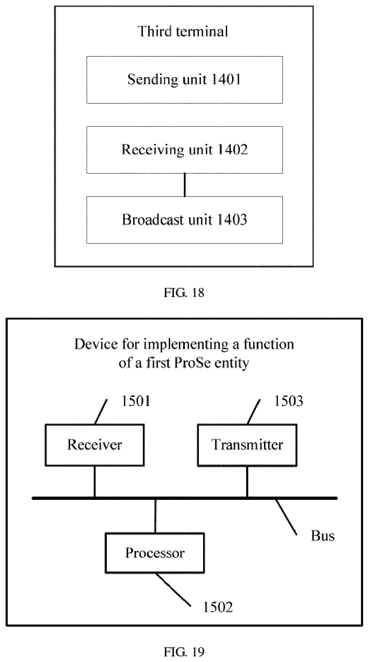

An embodiment of the present invention further provides a third terminal, configured to execute the terminal discovery methods shown in FIG. 4, FIG 5, FIG. 6, and FIG 7. As shown in FIG 18, the third terminal includes a sending unit 1401, a receiving unit 1402, and a broadcast unit 1403.

The sending unit 1401 is configured to send a ninth message to a third ProSe entity. where the ninth message carries a terminal identifier of the third terminal and a group identifier of a group in which the third terminal is located.

The receiving unit 1402 is configured to receive a tenth message sent by the third ProSe entity, where the tenth message carries a first broadcast code word, and the first broadcast code word includes a group code word of the group in which the third terminal is located and a user code word of the third terminal.

The broadcast unit 1403 is configured to broadcast the first broadcast code word.

Preferably, the group identifier is a temporary identifier allocated by an application server to the group in which the third terminal is located, and the terminal identifier of the third terminal is a temporary identifier allocated by the application server to the third terminal.

It should be noted that for specific descriptions of some function modules in the third terminal provided in this embodiment of the present invention, refer to corresponding content in the method embodiments, and details are not described in this embodiment again.

According to the third terminal provided in this embodiment of the present invention, a first broadcast code word broadcasted by a third terminal includes a group code word of a group in which the third terminal is located and a user code word of the third terminal. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

An embodiment of the present invention further provides a device for implementing a function of a first ProSe entity, configured to execute the terminal discovery methods shown in FIG. 1, FIG. 8, FIG. 9, and FIG. 10. As shown in FIG 19, the device includes a receiver 1501, a processor 1502, and a transmitter 1503.

The receiver 1501 is configured to receive a first message sent by a first terminal, where the first message carries a group identifier of a group in which a terminal to be monitored by the first terminal is located.

The processor 1502 is configured to obtain, according to the group identifier, a group code word of the group in which the terminal to be monitored by the first terminal is located.

The transmitter 1503 is configured to send a second message to the first terminal. where the second message carries the group code word.

The receiver 1501 is further configured to receive a third message sent by the first terminal, where the third message carries at least one first broadcast code word, the first broadcast code word is a broadcast code word that is of broadcast code words detected by the first terminal and that includes the group code word, and the first broadcast code word further includes a user code word of a terminal that broadcasts the first broadcast code word.

The processor 1502 is further configured to obtain, according to the user code word, a terminal identifier of the terminal that broadcasts the first broadcast code word.

The transmitter 1503 is further configured to send a fourth message to the first terminal, where the fourth message carries the terminal identifier.

Further, in a first case, the transmitter 1503 is further configured to send a fifth message to an application server, where the fifth message carries the group identifier, and the fifth message is used to request the application server to allocate a code word to the group in which the terminal to be monitored by the first terminal is located.

The receiver 1501 is further configured to receive a sixth message sent by the application server, where the sixth message carries the group code word.

Further, in a second case, the processor 1502 is specifically configured to generate the group code word according to the group identifier.

Further, in a third case, the transmitter 1503 is further configured to send a seventh message to a second ProSe entity, where the seventh message carries the group identifier, the seventh message is used to request the second ProSe entity to allocate a code word to the group in which the terminal to be monitored by the first terminal is located, the second ProSe entity is a ProSe entity in an HPLMN of a second terminal, and the second terminal is a group management device of the group in which the terminal to be monitored by the first terminal is located.

The receiver 1501 is further configured to receive an eighth message sent by the second ProSe entity, where the eighth message carries the group code word.

Preferably, the group identifier is a temporary identifier allocated by an application server to the group in which the terminal to be monitored by the first terminal is located, and the terminal identifier is a temporary identifier allocated by the application server to the terminal that broadcasts the first broadcast code word.

The receiver 1501, the processor 1502, and the transmitter 1503 are interconnected and complete mutual communication by using a bus.

The processor 1502 may be a central processing unit (English: Central Processing Unit, CPU for short), or may be a combination of the CPU and a digital signal processor (English: Digital Signal Processor, DSP for short).

The receiver 1501 and the transmitter 1503 may be apparatuses that receive and send a radio signal by using an antenna, or may be other apparatuses that provide signal receiving and sending interfaces.

It should be noted that for specific descriptions of some function modules in the device for implementing a function of a first ProSe entity provided in this embodiment of the present invention, refer to corresponding content in the method embodiments, and details are not described in this embodiment again. The device for implementing a function of a first ProSe entity provided in this embodiment of the present invention may be a new separate device in a core network, and provides only a function of a ProSe entity; or the device for implementing a function of a first ProSe entity may be obtained by adding a function of a first ProSe entity to an existing device in the core network, such as a mobility management entity (English: Mobile Managenment Entity, MME for short).

According to the device for implementing a function of a first ProSe entity provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

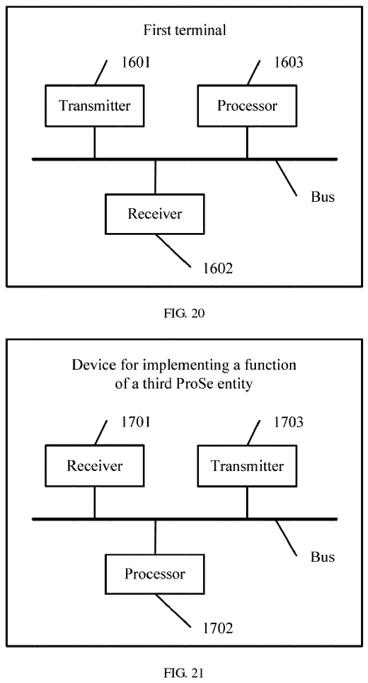

An embodiment of the present invention further provides a first terminal, configured to execute the terminal discovery methods shown in FIG. 2, FIG. 8, FIG. 9, and FIG. 10. As shown in FIG 20, the first terminal includes a transmitter 1601, a receiver 1602, and a processor 1603.

The transmitter 1601 is configured to send a first message to a first ProSe entity, where the first message carries a group identifier of a group in which a terminal to be monitored by the first terminal is located.

The receiver 1602 is configured to receive a second message sent by the first ProSe entity, where the second message carries a group code word of the group in which the terminal to be monitored by the first terminal is located.

The processor 1603 is configured to filter, by using the group code word, broadcast code words detected by the first terminal, to obtain at least one first broadcast code word, where the first broadcast code word includes the group code word.

The transmitter 1601 is further configured to send a third message to the first ProSe entity, where the third message carries the at least one first broadcast code word.

The receiver 1602 is further configured to receive a fourth message sent by the first ProSe entity, where the fourth message carries a terminal identifier of a terminal that broadcasts the first broadcast code word.

Preferably, the group identifier is a temporary identifier allocated by an application server to the group in which the terminal to be monitored by the first terminal is located, and the terminal identifier is a temporary identifier allocated by the application server to the terminal that broadcasts the first broadcast code word.

The transmitter 1601, the receiver 1602, and the processor 1603 are interconnected and complete mutual communication by using a bus.

The processor 1603 may be a central processing unit (English: Central Processing Unit, CPU for short), or may be a combination of the CPU and a digital signal processor (English: Digital Signal Processor, DSP for short).

The transmitter 1601 and the receiver 1602 may be apparatuses that receive and send a radio signal by using an antenna, or may be other apparatuses that provide signal receiving and sending interfaces.

It should be noted that for specific descriptions of some function modules in the first terminal provided in this embodiment of the present invention, refer to corresponding content in the method embodiments, and details are not described in this embodiment again.

According to the first terminal provided in this embodiment of the present invention, because each first broadcast code word includes a group code word, when a first terminal needs to monitor multiple terminals of a group, the first terminal only needs to filter once, by using the group code word (the group code word is a part of a broadcast code word), broadcast code words detected by the first terminal, and does not need to separately filter once, by using broadcast code words (multiple broadcast code words) of the multiple terminals of the group, the broadcast code words detected by the first terminal. A process of filtering the broadcast code words is relatively simple, and therefore energy consumption of the first terminal may be reduced.

An embodiment of the present invention further provides a device for implementing a function of a third ProSe entity, configured to execute the terminal discovery methods shown in FIG. 3, FIG. 5, FIG. 6, and FIG. 7. As shown in FIG. 21, the device includes a receiver 1701, a processor 1702, and a transmitter 1703.

The receiver 1701 is configured to receive a ninth message sent by a third terminal, where the ninth message carries a terminal identifier of the third terminal and a group identifier of a group in which the third terminal is located.

The processor 1702 is configured to: obtain, according to the group identifier, a group code word of the group in which the third terminal is located, allocate a user code word to the third terminal according to the terminal identifier of the third terminal, and generate a first broadcast code word by using the group code word and the user code word.

The transmitter 1703 is configured to send a tenth message to the third terminal, where the tenth message carries the first broadcast code word, and the tenth message is used to instruct the third terminal to broadcast the first broadcast code word.

Further, in a first case, the transmitter 1703 is further configured to send an eleventh message to an application server, where the eleventh message carries the group identifier, and the eleventh message is used to request the application server to allocate a code word to the group in which the third terminal is located.

The receiver 1701 is further configured to receive a twelfth message sent by the application server, where the twelfth message carries the group code word.

Further, in a second case, the processor 1702 is specifically configured to generate the group code word according to the group identifier.

Further, in a third case, the transmitter 1703 is further configured to send a thirteenth message to a second ProSe entity, where the thirteenth message carries the group identifier, the thirteenth message is used to request the second ProSe entity to allocate a code word to the group in which the third terminal is located, the second ProSe entity is a ProSe entity in an HPLMN of a second terminal, and the second terminal is a group management device of the group in which the third terminal is located.

The receiver 1701 is further configured to receive a fourteenth message sent by the second ProSe entity, where the fourteenth message carries the group code word.

Preferably, the group identifier is a temporary identifier allocated by an application server to the group in which the third terminal is located, and the terminal identifier of the third terminal is a temporary identifier allocated by the application server to the third terminal.

The receiver 1701, the processor 1702, and the transmitter 1703 are interconnected and complete mutual communication by using a bus.

The processor 1702 may be a central processing unit (English: Central Processing Unit, CPU for short), or may be a combination of the CPU and a digital signal processor (English: Digital Signal Processor, DSP for short).

The receiver 1701 and the transmitter 1703 may be apparatuses that receive and send a radio signal by using an antenna, or may be other apparatuses that provide signal receiving and sending interfaces.

It should be noted that for specific descriptions of some function modules in the device for implementing a function of a third ProSe entity provided in this embodiment of the present invention, refer to corresponding content in the method embodiments, and details are not described in this embodiment again. The device for implementing a function of a third ProSe entity provided in this embodiment of the present invention may be a new separate device in a core network, and provides only a function of a ProSe entity; or the device for implementing a function of a third ProSe entity may be obtained by adding a function of a third ProSe entity to an existing device in the core network, such as a mobility management entity (English: Mobile Managenment Entity, MME for short).

According to the device for implementing a function of a third ProSe entity provided in this embodiment of the present invention, a first broadcast code word allocated by a third ProSe entity to a third terminal includes a group code word. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

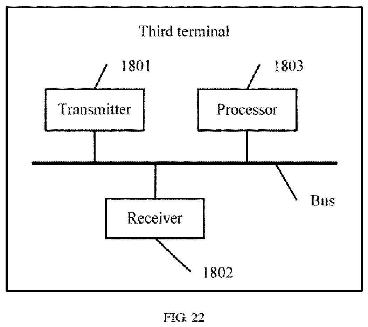

An embodiment of the present invention further provides a third terminal, configured to execute the terminal discovery shown in FIG. 4, FIG. 5, FIG. 6, and FIG 7. As shown in FIG. 22, the third terminal includes a transmitter 1801, a receiver 1802, and a processor 1803.

The transmitter 1081 is configured to send a ninth message to a third ProSe entity, where the ninth message carries a terminal identifier of the third terminal and a group identifier of a group in which the third terminal is located.

The receiver 1802 is configured to receive a tenth message sent by the third ProSe entity, where the tenth message carries a first broadcast code word, and the first broadcast code word includes a group code word of the group in which the third terminal is located and a user code word of the third terminal.

The processor 1803 is configured to broadcast the first broadcast code word.

Preferably, the group identifier is a temporary identifier allocated by an application server to the group in which the third terminal is located, and the terminal identifier of the third terminal is a temporary identifier allocated by the application server to the third terminal.

The transmitter 1801, the receiver 1802, and the processor 1803 are interconnected and complete mutual communication by using a bus.

The processor 1803 may be a central processing unit (English: Central Processing Unit, CPU for short), or may be a combination of the CPU and a digital signal processor (English: Digital Signal Processor, DSP for short).

The transmitter 1801 and the receiver 1802 may be apparatuses that receive and send a radio signal by using an antenna, or may be other apparatuses that provide signal receiving and sending interfaces.

It should be noted that for specific descriptions of some function modules in the third terminal provided in this embodiment of the present invention, refer to corresponding content in the method embodiments, and details are not described in this embodiment again.

According to the third terminal provided in this embodiment of the present invention, a first broadcast code word broadcasted by a third terminal includes a group code word of a group in which the third terminal is located and a user code word of the third terminal. If a first terminal can detect the first broadcast code word broadcasted by the third terminal, the first terminal can obtain, by filtering and by using the group code word, the first broadcast code word broadcasted by the third terminal. When another terminal that is in a same group as the third terminal also performs broadcasting, a first broadcast code word broadcasted by the another terminal that is in the same group as the third terminal also includes the group code word. The first terminal can also obtain, by filtering and by using the group code word, the first broadcast code word broadcasted by the another terminal that is in the same group as the third terminal, and the first terminal does not need to separately filter once, by using multiple first broadcast code words, broadcast code words detected by the first terminal. A process of filtering the broadcast code words is relatively simple, and therefore energy consumption of the first terminal may be reduced.

The foregoing descriptions about implementations allow persons skilled in the art to understand that, for the purpose of convenient and brief description, division of the foregoing function modules is used as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. The protection scope of the present invention shall be subject to the protection scope of the claims.

## Claims

1. A terminal discovery method performed by a first proximity service, ProSe, entity, the method comprising:
• receiving a first message sent by a first terminal, wherein the first message carries a group identifier of a group in which a terminal to be monitored by the first terminal is located and the group identifier is a temporary identifier allocated by an application server to the group in which the terminal to be monitored by the first terminal is located (S 901);
• obtaining according to the group identifier a group code word of the group in which the terminal to be monitored by the first terminal is located (S 902);
• sending a second message to the first terminal, wherein the second message carries the group code word (S 903);
• receiving a third message sent by the first terminal, wherein the third message carries at least one first broadcast code word,
wherein each of the at least one first broadcast code word is a broadcast code word among broadcast code words detected by the first terminal and that comprises the group code word, and each first broadcast code word further comprises a user code word of a terminal that broadcasts the corresponding first broadcast code word (S 904); and
• obtaining, for each of the at least one user code word, according to the user code word a terminal identifier of the terminal that broadcasts the corresponding first broadcast code word, and sending a fourth message to the first terminal, wherein the fourth message carries at least one terminal identifier, wherein each of the at least one terminal identifier is a temporary identifier allocated by the application server to the corresponding terminal that broadcasts the corresponding first broadcast code word (S 905),
• wherein when the first terminal and a second terminal belong to different home public land mobile networks, HPLMNs, and the second terminal is a group management device of the group in which the terminal to be monitored by the first terminal is located, the obtaining according to the group identifier, the group code word of the group in which the terminal to be monitored by the first terminal is located comprises:
∘ sending a fifth message to a second ProSe entity, wherein the fifth message carries the group identifier, the fifth message is used to request the second ProSe entity to allocate a code word to the group in which the terminal to be monitored by the first terminal is located, and the second ProSe entity is a ProSe entity in an HPLMN of the second terminal; and
∘ receiving a sixth message sent by the second ProSe entity, wherein the sixth message carries the group code word.

2. A device for implementing a function of a first proximity service, ProSe, entity, wherein the device is configured to perform the method according to claim 1.

## Patentansprüche

1. Endgeräteentdeckungsverfahren, das durch eine erste Proximitätsdienst- ("Proximity Service") bzw. ProSe-Entität durchgeführt wird, wobei das Verfahren Folgendes umfasst:
Empfangen einer ersten Nachricht, die durch ein erstes Endgerät gesendet wird, wobei die erste Nachricht eine Gruppenkennung einer Gruppe führt, in der sich ein durch das erste Endgerät zu überwachendes Endgerät befindet, und die Gruppenkennung eine temporäre Kennung ist, die der Gruppe, in der sich das durch das erste Endgerät zu überwachende Endgerät befindet, durch einen Anwendungsserver zugewiesen wird (S901);
Erhalten, gemäß der Gruppenkennung, eines Gruppencodeworts der Gruppe, in der sich das durch das erste Endgerät zu überwachende Endgerät befindet (S902);
Senden einer zweiten Nachricht zu dem ersten Endgerät, wobei die zweite Nachricht das Gruppencodewort führt (S903);
Empfangen einer dritten Nachricht, die durch das erste Endgerät gesendet wird, wobei die dritte Nachricht mindestens ein erstes "Broadcast"-Codewort führt,
wobei jedes des mindestens einen ersten "Broadcast"-Codeworts ein "Broadcast"-Codewort unter "Broadcast"-Codewörtern ist, das durch das erste Endgerät detektiert wird und das Gruppencodewort umfasst, und jedes erste "Broadcast"-Codewort ferner ein Benutzercodewort eines Endgeräts umfasst, das das entsprechende erste "Broadcast"-Codewort rundsendet (S904); und
Erhalten, für jedes des mindestens einen Benutzercodeworts, gemäß dem Benutzercodewort, einer Endgerätekennung des Endgeräts, das das entsprechende erste "Broadcast"-Codewort rundsendet, und Senden einer vierten Nachricht zu dem ersten Endgerät, wobei die vierte Nachricht mindestens eine Endgerätekennung führt, wobei jede der mindestens einen Endgerätekennung eine temporäre Kennung ist, die dem entsprechenden Endgerät, das das entsprechende erste "Broadcast"-Codewort rundsendet, durch den Anwendungsserver zugewiesen wird (S905),
wobei, wenn das erste Endgerät und ein zweites Endgerät zu verschiedenen öffentlichen Heimat-Landmobilnetzen bzw. HPLMNs ("Home Public Land Mobile Networks") gehören und das zweite Endgerät eine Gruppenverwaltungsvorrichtung der Gruppe ist, in der sich das durch das erste Endgerät zu überwachende Endgerät befindet, das Erhalten, gemäß der Gruppenkennung, des Gruppencodeworts der Gruppe, in der sich das durch das erste Endgerät zu überwachende Endgerät befindet, Folgendes umfasst:
Senden einer fünften Nachricht zu einer zweiten ProSe-Entität, wobei die fünfte Nachricht die Gruppenkennung führt, die fünfte Nachricht verwendet wird, um die zweite ProSe-Entität aufzufordern, der Gruppe, in der sich das durch das erste Endgerät zu überwachende Endgerät befindet, ein Codewort zuzuweisen, und die zweite ProSe-Entität eine ProSe-Entität in einem HPLMN des zweiten Endgeräts ist; und
Empfangen einer sechsten Nachricht, die durch die zweite ProSe-Entität gesendet wird, wobei die sechste Nachricht das Gruppencodewort führt.

2. Vorrichtung zum Implementieren einer Funktion einer ersten Proximitätsdienst- ("Proximity Service") bzw. ProSe-Entität, wobei die Vorrichtung dazu ausgelegt ist, das Verfahren nach Anspruch 1 durchzuführen.

## Revendications

1. Procédé de découverte de terminal réalisé par une première entité de service de proximité, ProSe, le procédé comprenant :
• la réception d'un premier message envoyé par un premier terminal, dans lequel le premier message porte un identifiant de groupe d'un groupe dans lequel un terminal destiné à être surveillé par le premier terminal est situé et l'identifiant de groupe est un identifiant temporaire attribué par un serveur d'application au groupe dans lequel le terminal destiné à être surveillé par le premier terminal est situé (S901) ;
• l'obtention, selon l'identifiant de groupe, d'un mot de code de groupe du groupe dans lequel le terminal destiné à être surveillé par le premier terminal est situé (S902) ;
• l'envoi d'un deuxième message au premier terminal, dans lequel le deuxième message porte le mot de code de groupe (S903) ;
• la réception d'un troisième message envoyé par le premier terminal, dans lequel le troisième message porte au moins un premier mot de code de diffusion,
dans lequel chacun de l'au moins un premier mot de code de diffusion est un mot de code de diffusion parmi des mots de code de diffusion détectés par le premier terminal et qui comprend le mot de code de groupe, et chaque premier mot de code de diffusion comprend en outre un mot de code d'utilisateur d'un terminal qui diffuse le premier mot de code de diffusion correspondant (S904) ; et
• l'obtention, pour chacun de l'au moins un mot de code d'utilisateur, selon le mot de code d'utilisateur, d'un identifiant de terminal du terminal qui diffuse le premier mot de code de diffusion correspondant, et l'envoi d'un quatrième message au premier terminal, dans lequel le quatrième message porte au moins un identifiant de terminal, dans lequel chacun de l'au moins un identifiant de terminal est un identifiant temporaire attribué par le serveur d'application au terminal correspondant qui diffuse le premier mot de code de diffusion correspondant (S905),
• dans lequel, lorsque le premier terminal et un second terminal appartiennent à différents réseaux mobiles terrestres publics domestiques, HPLMN, et le second terminal est un dispositif de gestion de groupe du groupe dans lequel le terminal destiné à être surveillé par le premier terminal est situé, l'obtention, selon l'identifiant de groupe, du mot de code de groupe du groupe dans lequel le terminal destiné à être surveillé par le premier terminal est situé comprend :
∘ l'envoi d'un cinquième message à une seconde entité de ProSe, dans lequel le cinquième message porte l'identifiant de groupe, le cinquième message est utilisé pour demander à la seconde entité de ProSe d'attribuer un mot de code au groupe dans lequel le terminal destiné à être surveillé par le premier terminal est situé, et la seconde entité de ProSe est une entité de ProSe dans un HPLMN du second terminal ; et
∘ la réception d'un sixième message envoyé par la seconde entité de ProSe, dans lequel le sixième message porte le mot de code de groupe.

2. Dispositif pour implémenter une fonction d'une première entité de service de proximité, ProSe, le dispositif étant configuré pour réaliser le procédé selon la revendication 1.
